# EUROPÄISCHE PATENTSCHRIFT

(11) **EP 3 485 651 B1**
(45) Veröffentlichungstag und Bekanntmachung des Hinweises auf die Patenterteilung: **03.09.2025**
(21) Anmeldenummer: 17742394.4
(22) Anmeldetag: 10.07.2017
(51) Int. Cl.: H04Q 9/00

(54) **DETEKTIONSVORRICHTUNG ZUM DETEKTIEREN EINER PHYSIKALISCHEN GRÖSSE**
DETECTION DEVICE FOR DETECTING A PHYSICAL VARIABLE
DISPOSITIF CONÇU POUR LA DÉTECTION D'UNE GRANDEUR PHYSIQUE

(30) Priorität: 14.07.2016 EP 16179532
(43) Veröffentlichungstag der Anmeldung: 22.05.2019
(73) Patentinhaber: Deutsche Telekom AG, 53113 Bonn (DE)
(72) Erfinder: NEUBACHER, Andreas, A-2100 Korneuburg (AT)
(74) Vertreter: Braun-Dullaeus Pannen Emmerling Patent- & Rechtsanwaltspartnerschaft mbB
(86) Internationale Anmeldenummer: PCT/EP2017/067282
(87) Internationale Veröffentlichungsnummer: WO 2018/011146

(56) Entgegenhaltungen:
- EP-A1- 2 685 744

## Beschreibung

### TECHNISCHES GEBIET

Die vorliegende Erfindung betrifft das Gebiet der Detektion einer physikalischen Größe und der Übertragung von Daten, welche die physikalische Größe repräsentieren, über ein Kommunikationsnetzwerk.

### TECHNISCHER HINTERGRUND

Unter dem Begriff des Internets der Dinge (engl. Internet of Things, loT) wird die Vernetzung physikalischer Objekte über ein Kommunikationsnetzwerk verstanden, wodurch beispielsweise eine effizientere Überwachung der physikalischen Objekte und ein Austausch von Informationen über die physikalischen Objekte ermöglicht wird.

Das Internet der Dinge ist insbesondere im Bereich der Hausautomatisierungstechnik und Industrieautomatisierungstechnik von zunehmender Bedeutung, wobei unterschiedliche physikalische Größen, wie beispielsweise eine Temperatur oder ein Energieverbrauch, effizient detektiert werden sollen. Im Bereich der Hausautomatisierungstechnik werden beispielsweise Heizungssensoren zur Abrechnung der Heizungskosten zunehmend mit entsprechender Funktionalität ausgestattet. Im Bereich der Industrieautomatisierung sollen beispielsweise Produktionsabläufe optimiert und effizienter durchgeführt werden. Entsprechende Ansätze hierfür werden zumeist unter dem Begriff der Industrie 4.0 zusammengefasst.

Zur Detektion der physikalischen Größe sowie zur Übertragung der Daten, welche die physikalische Größe repräsentieren, werden üblicherweise kostengünstige Geräte eingesetzt. Der Zugriff auf den Kommunikationskanal wird dabei typischerweise nicht mittels komplexer Verfahren zur Medienzugriffssteuerung (engl. Media Access Control, MAC) gesteuert. Die Daten, welche die physikalische Größe repräsentieren, werden daher zumeist unkoordiniert ausgesendet. Dies kann jedoch zu Kollisionen und Verlusten von Daten auf dem Kommunikationskanal führen.

Die EP 2 685 744 A1 zeigt Detektionsvorrichtungen in einem Kommunikationsnetzwerk zur Erfassung von Sensordaten in einem industriellen Prozess. Hierbei senden die Sensoren ihre Messdaten in einem sogenannten "Superframe" an einen Zugangspunkt. Die Superframes sind hierbei in kleinere Zeitintervalle aufgeteilt, wobei diese Zeitintervalle jeweils einem der Sensoren zugeordnet sind. Ein Netzwerk Manager 7-2 reguliert und bestimmt wann die Sensoren N1, N2, ... innerhalb des Superframes senden dürfen.

### BESCHREIBUNG DER ERFINDUNG

Es ist daher die Aufgabe der vorliegenden Erfindung, ein effizientes Konzept zur Medienzugriffssteuerung auf einem Kommunikationskanal zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Detektionsvorrichtung gelöst werden kann, welcher eine Netzwerkadresse zugeordnet ist und welche ausgebildet ist, ein Broadcastsignal von einer Serverentität zu empfangen.

Das Broadcastsignal kann eine Angabe über zumindest einen freien Sendezeitschlitz aufweisen, wobei die Detektionsvorrichtung ausgebildet ist, ein Aussenden der Daten in dem freien Sendezeitschlitz zu unterbinden, falls das Broadcastsignal die Netzwerkadresse der Detektionsvorrichtung anzeigt. Ferner kann die Detektionsvorrichtung ausgebildet sein, das Aussenden der Daten zuzulassen, falls das Broadcastsignal die Netzwerkadresse der Detektionsvorrichtung nicht anzeigt. Zudem kann der Detektionsvorrichtung eine vorbestimmte Sendeperiodendauer zugeordnet sein, auf deren Grundlage eine periodische Aussendung der Daten erfolgen kann.

Dadurch wird erreicht, dass ein Zugriff einer Gruppe von Detektionsvorrichtungen auf den Kommunikationskanal effizient gesteuert werden kann und zugleich eine kostengünstige Implementierung der einzelnen Detektionsvorrichtungen möglich wird. Ferner kann auf ein Aussenden eines Bestätigungssignals zur Bestätigung eines erfolgreichen Empfangs der Daten, beispielsweise durch die Serverentität, verzichtet werden, da die jeweilige Detektionsvorrichtung durch eine Anzeige ihrer Netzwerkadresse in dem Broadcastsignal auf einen erfolgreichen Empfang der Daten schließen kann.

Gemäß einem ersten Aspekt betrifft die Erfindung eine Detektionsvorrichtung zum Detektieren einer physikalischen Größe, wobei der Detektionsvorrichtung eine Netzwerkadresse zugeordnet ist, mit einem Detektor zum Detektieren der physikalischen Größe, wobei der Detektor ausgebildet ist, Daten auszugeben, welche die physikalische Größe repräsentieren, und einer Kommunikationsschnittstelle, welche ausgebildet ist, ein Broadcastsignal über ein Kommunikationsnetzwerk zu empfangen, wobei das Broadcastsignal eine Angabe über zumindest einen freien Sendezeitschlitz in einem vorbestimmten Sendeintervall aufweist, und wobei die Kommunikationsschnittstelle ausgebildet ist, das Aussenden der Daten in dem freien Sendezeitschlitz zu unterbinden, falls das Broadcastsignal die Netzwerkadresse der Detektionsvorrichtung anzeigt. Dadurch wird der Vorteil erreicht, dass ein effizientes Konzept zur Medienzugriffssteuerung auf einem Kommunikationskanal realisiert werden kann.

Die Netzwerkadresse der Detektionsvorrichtung kann eine Internet Protocol (IP) Adresse, beispielsweise eine IPv4-Adresse oder eine IPv6-Adresse, sein.

Die Kommunikationsschnittstelle ist ausgebildet, das Aussenden der Daten in dem freien Sendezeitschlitz zuzulassen, falls das Broadcastsignal die Netzwerkadresse der Detektionsvorrichtung nicht anzeigt. Dadurch wird der Vorteil erreicht, dass die Medienzugriffssteuerung auf dem Kommunikationskanal effizienter realisiert werden kann.

Gemäß einer Ausführungsform ist der Detektor ausgebildet, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen. Der Detektor kann hierfür einen Sensor zum Bestimmen der physikalischen Größe umfassen. Dadurch wird der Vorteil erreicht, dass physikalische Größen, welche im Bereich der Heimautomatisierungstechnik sowie im Bereich der Industrieautomatisierungstechnik von Bedeutung sind, effizient bestimmt werden können.

Gemäß einer Ausführungsform ist der Detektionsvorrichtung eine vorbestimmte Sendeperiodendauer zugeordnet, wobei die vorbestimmte Sendeperiodendauer eine zeitliche Differenz zwischen einem weiteren freien Sendezeitschlitzes und dem freien Sendezeitschlitz anzeigt, und wobei die Kommunikationsschnittstelle ausgebildet ist, das Aussenden der Daten in dem weiteren freien Sendezeitschlitz zu unterbinden, falls das Broadcastsignal die Netzwerkadresse der Detektionsvorrichtung anzeigt. Dadurch wird der Vorteil erreicht, dass eine periodische Aussendung der Daten realisiert werden kann.

Gemäß einer Ausführungsform ist die Kommunikationsschnittstelle ausgebildet, das Aussenden der Daten in dem weiteren freien Sendezeitschlitz zuzulassen, falls das Broadcastsignal die Netzwerkadresse der Detektionsvorrichtung nicht anzeigt. Dadurch wird der Vorteil erreicht, dass die periodische Aussendung der Daten effizienter realisiert werden kann.

Gemäß einer Ausführungsform ist die Kommunikationsschnittstelle ausgebildet, die Daten an eine vorbestimmte Zielnetzwerkadresse über das Kommunikationsnetzwerk auszusenden. Dadurch wird der Vorteil erreicht, dass eine effiziente Übertragung der Daten realisiert werden kann.

Die vorbestimmte Zielnetzwerkadresse kann eine Internet Protocol (IP) Adresse, beispielsweise eine IPv4-Adresse oder eine IPv6-Adresse, sein.

Gemäß einer Ausführungsform ist der Detektionsvorrichtung eine vorbestimmte Identitätskennung zugeordnet, wobei der Detektor ausgebildet ist, die Daten mit der vorbestimmten Identitätskennung zu verknüpfen, und wobei die Kommunikationsschnittstelle ausgebildet ist, die Daten mit der vorbestimmten Identitätskennung auszusenden. Dadurch wird der Vorteil erreicht, dass die ausgesendeten Daten der Detektionsvorrichtung, beispielsweise durch eine Serverentität, effizient zugeordnet werden können.

Die vorbestimmte Identitätskennung kann der Detektionsvorrichtung bei deren Herstellung fest zugeordnet werden. Die vorbestimmte Identitätskennung kann beispielsweise eine Media Access Control (MAC) Adresse oder eine International Mobile Station Equipment Identity (IMEI) Nummer sein, welche der Detektionsvorrichtung zugeordnet ist.

Gemäß einer Ausführungsform ist die vorbestimmte Identitätskennung der Detektionsvorrichtung die Netzwerkadresse der Detektionsvorrichtung. Dadurch wird der Vorteil erreicht, dass die ausgesendeten Daten der Detektionsvorrichtung, beispielsweise durch eine Serverentität, effizient zugeordnet werden können.

Die Netzwerkadresse kann der Detektionsvorrichtung beispielweise durch die Serverentität über das Kommunikationsnetzwerk zugewiesen werden.

Gemäß einer Ausführungsform ist der Detektor ausgebildet, die detektierte physikalische Größe mit einer vorbestimmten physikalischen Referenzgröße zu vergleichen, wobei die Kommunikationsschnittstelle ausgebildet ist, das Aussenden der Daten in dem freien Sendezeitschlitz zuzulassen, falls die detektierte physikalische Größe die vorbestimmte physikalische Referenzgröße überschreitet und falls das Broadcastsignal die Netzwerkadresse der Detektionsvorrichtung nicht anzeigt. Dadurch wird der Vorteil erreicht, dass eine effiziente Überwachung der physikalischen Größe durch die Detektionsvorrichtung realisiert werden kann. Die Daten werden folglich nur ausgesendet, falls die detektierte physikalische Größe die vorbestimmte physikalische Referenzgröße überschreitet und falls das Broadcastsignal zugleich die Netzwerkadresse der Detektionsvorrichtung nicht anzeigt.

Gemäß einer Ausführungsform umfasst die Detektionsvorrichtung einen Zeitgeber, insbesondere eine Echtzeituhr, zum Bereitstellen eines Zeitsignals, wobei das Zeitsignal eine Zeitdifferenz zwischen einem gegenwärtigen Zeitpunkt und einem vorbestimmten Referenzzeitpunkt anzeigt, und wobei die Kommunikationsschnittstelle ausgebildet ist, einen Beginn des freien Sendezeitschlitzes auf der Basis des Zeitsignals zu bestimmen. Dadurch wird der Vorteil erreicht, dass auf die Bereitstellung eines externen Zeitsignals verzichtet werden kann und der Beginn des freien Sendezeitschlitzes durch die Detektionsvorrichtung effizient bestimmt werden kann.

Gemäß einer Ausführungsform ist die Kommunikationsschnittstelle ausgebildet, ein Zeitsynchronisationssignal von einer Serverentität über das Kommunikationsnetzwerk zu empfangen, wobei der Zeitgeber ausgebildet ist, das Zeitsignal auf der Basis des empfangenen Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst der Zeitgeber einen Satellitennavigationsempfänger, insbesondere einen GPS-Satellitennavigationsempfänger oder einen GALILEO-Satellitennavigationsempfänger, wobei der Satellitennavigationsempfänger ausgebildet ist, ein Zeitsynchronisationssignal bereitzustellen, und wobei der Zeitgeber ausgebildet ist, das Zeitsignal auf der Basis des bereitgestellten Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst der Zeitgeber einen Zeitzeichenempfänger, insbesondere einen DCF77-Empfänger, wobei der Zeitzeichenempfänger ausgebildet ist, ein Zeitsynchronisationssignal bereitzustellen, und wobei der Zeitgeber ausgebildet ist, das Zeitsignal auf der Basis des bereitgestellten Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst das Kommunikationsnetzwerk eine Mehrzahl von Subnetzwerken, und wobei die Kommunikationsschnittstelle ausgebildet ist, die Daten über ein Subnetzwerk der Mehrzahl von Subnetzwerken auszusenden. Dadurch wird der Vorteil erreicht, dass die Mehrzahl von Subnetzwerken auf verschiedene Anwendungen ausgelegt werden können und eine effizientere Übertragung der Daten über das Kommunikationsnetzwerk realisiert werden kann.

Gemäß einer Ausführungsform ist das Kommunikationsnetzwerk ein Kommunikationsnetzwerk der fünften Generation (5G) oder einer weiteren Generation, wobei jedes Subnetzwerk ein Slice des Kommunikationsnetzwerkes ist. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einem zweiten Aspekt betrifft die Erfindung eine Gruppe von Detektionsvorrichtungen, wobei jeder Detektionsvorrichtung ein freier Sendezeitschlitz in einem vorbestimmten Sendeintervall zum Aussenden von Daten zugeordnet ist, und wobei die freien Sendezeitschlitze unterschiedlich sind. Dadurch wird der Vorteil erreicht, dass ein effizientes Konzept zur Medienzugriffssteuerung auf einem Kommunikationskanal realisiert werden kann.

Gemäß einem dritten Aspekt betrifft die Erfindung eine Serverentität zum Kommunizieren mit einer Detektionsvorrichtung über ein Kommunikationsnetzwerk, wobei der Detektionsvorrichtung eine Netzwerkadresse zugeordnet ist, wobei die Detektionsvorrichtung ausgebildet ist, eine physikalische Größe zu detektieren, und Daten auszugeben, welche die physikalische Größe repräsentieren, wobei die Detektionsvorrichtung ausgebildet ist, ein Broadcastsignal über das Kommunikationsnetzwerk zu empfangen, wobei das Broadcastsignal eine Angabe über zumindest einen freien Sendezeitschlitz in einem vorbestimmten Sendeintervall aufweist, wobei die Detektionsvorrichtung ausgebildet ist, das Aussenden der Daten in dem freien Sendezeitschlitz zu unterbinden, falls das Broadcastsignal die Netzwerkadresse der Detektionsvorrichtung anzeigt, mit einem Prozessor, welcher ausgebildet ist, den freien Sendezeitschlitz in dem vorbestimmten Sendeintervall zu bestimmen, und das Broadcastsignal zu erzeugen, wobei das Broadcastsignal die Angabe über den freien Sendezeitschlitz aufweist, wobei das Broadcastsignal die Netzwerkadresse der Detektionsvorrichtung anzeigt, und einer Kommunikationsschnittstelle, welche ausgebildet ist, das Broadcastsignal über das Kommunikationsnetzwerk an die Detektionsvorrichtung auszusenden. Dadurch wird der Vorteil erreicht, dass ein effizientes Konzept zur Medienzugriffssteuerung auf einem Kommunikationskanal realisiert werden kann.

Die Serverentität kann ausgebildet sein, freie Sendezeitschlitze und/oder belegte Sendezeitschlitze einer Mehrzahl von Detektionsvorrichtungen zu verwalten.

Die Serverentität kann eine Basisstation sein, wobei die Basisstation ausgebildet ist, über ein Funkkommunikationsnetzwerk als Kommunikationsnetzwerk mit der Detektionsvorrichtung zu kommunizieren. Die Serverentität kann ferner ein Controller sein, wobei der Controller einem Rücktransportnetzwerk (engl, backhaul network) des Kommunikationsnetzwerkes zugeordnet ist.

Gemäß einer Ausführungsform umfasst die Serverentität einen Zeitgeber, insbesondere eine Echtzeituhr, zum Bereitstellen eines Zeitsignals, wobei das Zeitsignal eine Zeitdifferenz zwischen einem gegenwärtigen Zeitpunkt und einem vorbestimmten Referenzzeitpunkt anzeigt, wobei der Prozessor ausgebildet ist, ein Zeitsynchronisationssignal auf der Basis des Zeitsignals zu erzeugen, und wobei die Kommunikationsschnittstelle ausgebildet ist, das Zeitsynchronisationssignal über das Kommunikationsnetzwerk an die Detektionsvorrichtung auszusenden. Dadurch wird der Vorteil erreicht, dass eine Synchronisation einer Mehrzahl von Zeitgebern in verschiedenen Detektionsvorrichtungen hinsichtlich desselben Referenzzeitpunktes effizient realisiert werden kann.

Gemäß einer Ausführungsform ist die Kommunikationsschnittstelle ausgebildet, ein Zeitschlitzbelegungssignal von einer weiteren Serverentität über das Kommunikationsnetzwerk zu empfangen, wobei das Zeitschlitzbelegungssignal einen belegten Sendezeitschlitz in dem vorbestimmten Sendeintervall anzeigt, und wobei der Prozessor ausgebildet ist, den freien Sendezeitschlitz in dem vorbestimmten Sendeintervall auf der Basis des Zeitschlitzbelegungssignals zu bestimmen. Dadurch wird der Vorteil erreicht, dass eine effiziente Verwaltung von freien Sendezeitschlitzen und/oder belegten Sendezeitschlitzen realisiert werden kann.

Gemäß einer Ausführungsform ist der Prozessor ausgebildet, einen belegten Sendezeitschlitz in dem vorbestimmten Sendeintervall zu bestimmen, und ein Zeitschlitzbelegungssignal zum Aussenden an eine weitere Serverentität zu erzeugen, wobei das Zeitschlitzbelegungssignal den belegten Sendezeitschlitz in dem vorbestimmten Sendeintervall anzeigt, und wobei die Kommunikationsschnittstelle ausgebildet ist, das Zeitschlitzbelegungssignal an die weitere Serverentität über das Kommunikationsnetzwerk auszusenden. Dadurch wird der Vorteil erreicht, dass eine effiziente Verwaltung von freien Sendezeitschlitzen und/oder belegten Sendezeitschlitzen realisiert werden kann.

Gemäß einem vierten Aspekt betrifft die Erfindung ein Kommunikationssystem, mit einer Gruppe von Detektionsvorrichtungen, wobei jeder Detektionsvorrichtung der Gruppe ein freier Sendezeitschlitz in einem vorbestimmten Sendeintervall zum Aussenden von Daten zugeordnet ist, und wobei die freien Sendezeitschlitze unterschiedlich sind, und einer Serverentität, welche ausgebildet ist, mit jeder Detektionsvorrichtung der Gruppe über ein Kommunikationsnetzwerk zu kommunizieren. Dadurch wird der Vorteil erreicht, dass ein effizientes Konzept zur Medienzugriffssteuerung auf einem Kommunikationskanal realisiert werden kann.

Gemäß einer Ausführungsform ist jede Detektionsvorrichtung der Gruppe ausgebildet, die Daten jeweils an die Serverentität über das Kommunikationsnetzwerk auszusenden. Dadurch wird der Vorteil erreicht, dass die Daten effizient durch die Serverentität ausgewertet und gespeichert werden können.

Gemäß einer Ausführungsform umfasst das Kommunikationssystem eine weitere Gruppe von Detektionsvorrichtungen, wobei jeder Detektionsvorrichtung der weiteren Gruppe ein freier Sendezeitschlitz in dem vorbestimmten Sendeintervall oder in einem weiteren Sendeintervall zum Aussenden von Daten zugeordnet ist, und wobei die freien Sendezeitschlitze unterschiedlich sind, und eine weitere Serverentität, welche ausgebildet ist, mit jeder Detektionsvorrichtung der weiteren Gruppe über das Kommunikationsnetzwerk zu kommunizieren. Dadurch wird der Vorteil erreicht, dass die freien Sendezeitschlitze der Gruppe sowie die freien Sendezeitschlitze der weiteren Gruppe effizient verwaltet werden können.

Die Serverentität und die weitere Serverentität können über das Kommunikationsnetzwerk miteinander kommunizieren. Die Serverentität und die weitere Serverentität können Zeitschlitzbelegungssignale miteinander austauschen.

Gemäß einer Ausführungsform folgen das Sendeintervall und das weitere Sendeintervall zeitlich aufeinander. Dadurch wird der Vorteil erreicht, dass eine Überlappung der Sendeintervalle und/oder eine Kollision von Daten effizient verhindert werden kann.

Gemäß einer Ausführungsform ist jede Detektionsvorrichtung der weiteren Gruppe ausgebildet, die Daten jeweils an die weitere Serverentität über das Kommunikationsnetzwerk auszusenden. Dadurch wird der Vorteil erreicht, dass die Daten effizient durch die weitere Serverentität ausgewertet und gespeichert werden können.

Gemäß einer Ausführungsform weisen die freien Sendezeitschlitze der Gruppe von Detektionsvorrichtungen jeweils eine Sendezeitschlitzdauer auf, wobei die freien Sendezeitschlitze der weiteren Gruppe von Detektionsvorrichtungen jeweils eine weitere Sendezeitschlitzdauer aufweisen, und wobei die Sendezeitschlitzdauer und die weitere Sendezeitschlitzdauer unterschiedlich sind. Dadurch wird der Vorteil erreicht, dass eine Kapazität des Kommunikationssystems erhöht werden kann.

Gemäß einer Ausführungsform ist das Kommunikationsnetzwerk ein Kommunikationsnetzwerk der fünften Generation (5G) oder einer weiteren Generation, wobei das Kommunikationsnetzwerk ein Subnetzwerk, insbesondere ein Slice, und ein weiteres Subnetzwerk, insbesondere ein weiteres Slice, umfasst, wobei die Gruppe von Detektionsvorrichtungen und die Serverentität dem Subnetzwerk zugeordnet sind, und wobei die weitere Gruppe von Detektionsvorrichtungen und die weitere Serverentität dem weiteren Subnetzwerk zugeordnet sind. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einem fünften Aspekt betrifft die Erfindung ein Verfahren zum Detektieren einer physikalischen Größe unter Verwendung einer Detektionsvorrichtung, wobei die Detektionsvorrichtung einen Detektor und eine Kommunikationsschnittstelle umfasst, wobei der Detektionsvorrichtung eine Netzwerkadresse zugeordnet ist, mit einem Detektieren der physikalischen Größe durch den Detektor, einem Ausgeben von Daten durch den Detektor, welche die physikalische Größe repräsentieren, einem Empfangen eines Broadcastsignals über ein Kommunikationsnetzwerk durch die Kommunikationsschnittstelle, wobei das Broadcastsignal eine Angabe über zumindest einen freien Sendezeitschlitz in einem vorbestimmten Sendeintervall aufweist, und einem Unterbinden des Aussendens der Daten in dem freien Sendezeitschlitz durch die Kommunikationsschnittstelle, falls das Broadcastsignal die Netzwerkadresse der Detektionsvorrichtung anzeigt. Dadurch wird der Vorteil erreicht, dass ein effizientes Konzept zur Medienzugriffssteuerung auf einem Kommunikationskanal realisiert werden kann.

Das Verfahren kann durch die Detektionsvorrichtung ausgeführt werden. Weitere Merkmale des Verfahrens ergeben sich unmittelbar aus der Funktionalität und/oder den Merkmalen der Detektionsvorrichtung.

Gemäß einem sechsten Aspekt betrifft die Erfindung ein Verfahren zum Kommunizieren mit einer Detektionsvorrichtung über ein Kommunikationsnetzwerk unter Verwendung einer Serverentität, wobei die Serverentität einen Prozessor und eine Kommunikationsschnittstelle umfasst, wobei der Detektionsvorrichtung eine Netzwerkadresse zugeordnet ist, wobei die Detektionsvorrichtung ausgebildet ist, eine physikalische Größe zu detektieren, und Daten auszugeben, welche die physikalische Größe repräsentieren, wobei die Detektionsvorrichtung ausgebildet ist, ein Broadcastsignal über das Kommunikationsnetzwerk zu empfangen, wobei das Broadcastsignal eine Angabe über zumindest einen freien Sendezeitschlitz in einem vorbestimmten Sendeintervall aufweist, wobei die Detektionsvorrichtung ausgebildet ist, das Aussenden der Daten in dem freien Sendezeitschlitz zu unterbinden, falls das Broadcastsignal die Netzwerkadresse der Detektionsvorrichtung anzeigt, mit einem Bestimmen des freien Sendezeitschlitzes in dem vorbestimmten Sendeintervall durch den Prozessor, einem Erzeugen des Broadcastsignals durch den Prozessor, wobei das Broadcastsignal die Angabe über den freien Sendezeitschlitz aufweist, wobei das Broadcastsignal die Netzwerkadresse der Detektionsvorrichtung anzeigt, und einem Aussenden des Broadcastsignals über das Kommunikationsnetzwerk an die Detektionsvorrichtung durch die Kommunikationsschnittstelle. Dadurch wird der Vorteil erreicht, dass ein effizientes Konzept zur Medienzugriffssteuerung auf einem Kommunikationskanal realisiert werden kann.

Das Verfahren kann durch die Serverentität ausgeführt werden. Weitere Merkmale des Verfahrens ergeben sich unmittelbar aus der Funktionalität und/oder den Merkmalen der Serverentität.

Gemäß einem siebten Aspekt betrifft die Erfindung ein Computerprogramm mit einem Programmcode zum Ausführen des Verfahrens zum Detektieren einer physikalischen Größe oder des Verfahrens zum Kommunizieren mit einer Detektionsvorrichtung, wenn der Programmcode auf einem Computer ausgeführt wird. Dadurch wird der Vorteil erreicht, dass die Verfahren automatisiert ausgeführt werden können.

Die Detektionsvorrichtung und/oder die Serverentität können programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Detektionsvorrichtung zum Detektieren einer physikalischen Größe gemäß einer Ausführungsform;
Fig. 2 ein schematisches Diagramm einer Gruppe von Detektionsvorrichtungen zum Detektieren einer physikalischen Größe gemäß einer Ausführungsform;
Fig. 3 ein schematisches Diagramm einer Serverentität zum Kommunizieren mit einer Detektionsvorrichtung über ein Kommunikationsnetzwerk gemäß einer Ausführungsform;
Fig. 4 ein schematisches Diagramm eines Kommunikationssystems gemäß einer Ausführungsform;
Fig. 5 ein schematisches Diagramm eines Verfahrens zum Detektieren einer physikalischen Größe unter Verwendung einer Detektionsvorrichtung gemäß einer Ausführungsform;
Fig. 6 ein schematisches Diagramm eines Verfahrens zum Kommunizieren mit einer Detektionsvorrichtung über ein Kommunikationsnetzwerk unter Verwendung einer Serverentität gemäß einer Ausführungsform;
Fig. 7 ein schematisches Diagramm einer Detektionsvorrichtung zum Detektieren einer physikalischen Größe gemäß einer Ausführungsform;
Fig. 8 ein schematisches Diagramm eines Kommunikationssystems gemäß einer Ausführungsform;
Fig. 9 ein schematisches Diagramm eines Sendeintervalls mit einer Mehrzahl von Sendezeitschlitzen gemäß einer Ausführungsform;
Fig. 10 ein schematisches Diagramm einer Mehrzahl von Sendeintervallen mit einer Mehrzahl von Sendezeitschlitzen gemäß einer Ausführungsform;
Fig. 11 ein schematisches Diagramm eines Kommunikationssystems gemäß einer Ausführungsform; und
Fig. 12 ein schematisches Diagramm eines Kommunikationssystems gemäß einer Ausführungsform.

### DETAILIERTE BESCHREIBUNG DER FIGUREN

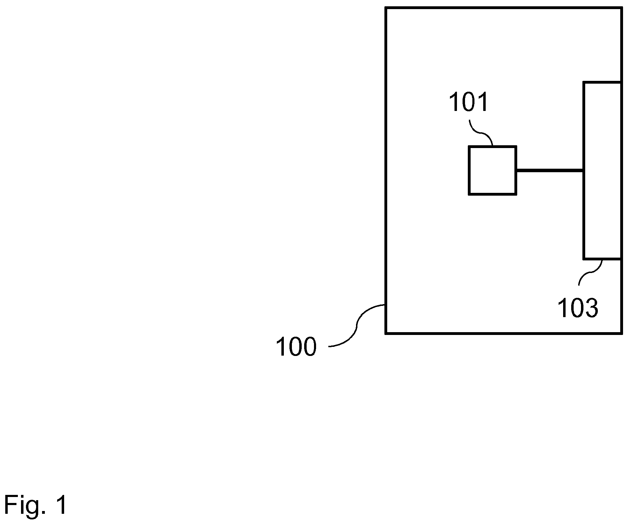

Fig. 1 zeigt ein schematisches Diagramm einer Detektionsvorrichtung 100 zum Detektieren einer physikalischen Größe gemäß einer Ausführungsform. Der Detektionsvorrichtung 100 ist eine Netzwerkadresse zugeordnet.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Die Detektionsvorrichtung 100 umfasst ferner eine Kommunikationsschnittstelle 103, welche ausgebildet ist, ein Broadcastsignal über ein Kommunikationsnetzwerk zu empfangen, wobei das Broadcastsignal eine Angabe über zumindest einen freien Sendezeitschlitz in einem vorbestimmten Sendeintervall aufweist. Die Kommunikationsschnittstelle 103 ist ausgebildet, das Aussenden der Daten in dem freien Sendezeitschlitz zu unterbinden, falls das Broadcastsignal die Netzwerkadresse der Detektionsvorrichtung 100 anzeigt.

Die Detektionsvorrichtung 100 kann ferner einen Zeitgeber, insbesondere eine Echtzeituhr, zum Bereitstellen eines Zeitsignals umfassen. Das Zeitsignal zeigt eine Zeitdifferenz zwischen einem gegenwärtigen Zeitpunkt und einem vorbestimmten Referenzzeitpunkt an. Die Kommunikationsschnittstelle 103 ist ausgebildet, einen Beginn des freien Sendezeitschlitzes auf der Basis des Zeitsignals zu bestimmen.

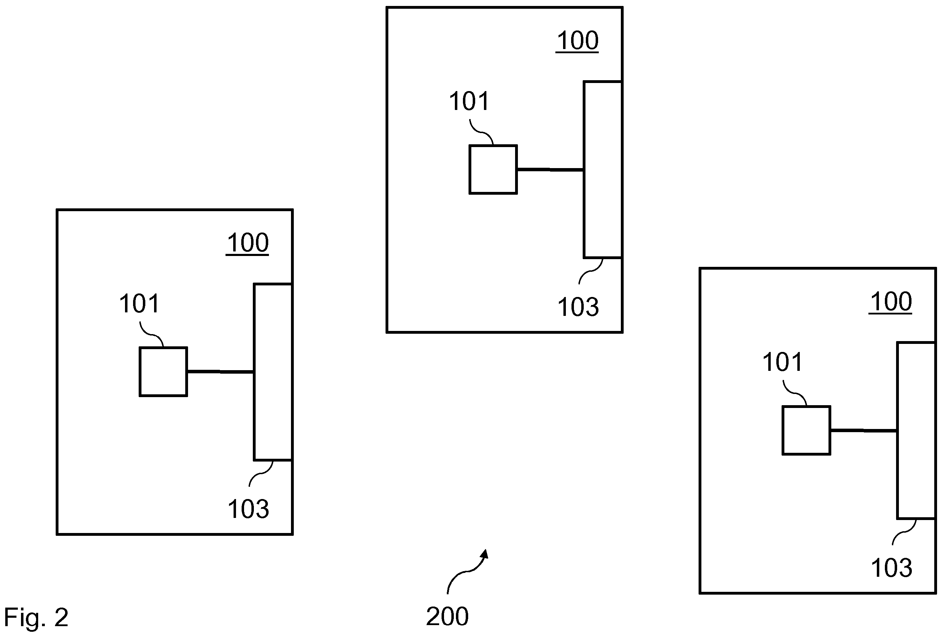

Fig. 2 zeigt ein schematisches Diagramm einer Gruppe 200 von Detektionsvorrichtungen 100 zum Detektieren einer physikalischen Größe gemäß einer Ausführungsform.

Jeder Detektionsvorrichtung 100 ist jeweils eine Netzwerkadresse zugeordnet. Jede Detektionsvorrichtung 100 umfasst jeweils einen Detektor 101 und eine Kommunikationsschnittstelle 103. Jeder Detektionsvorrichtung 100 ist ein freier Sendezeitschlitz in einem vorbestimmten Sendeintervall zum Aussenden von Daten zugeordnet. Die freien Sendezeitschlitze sind unterschiedlich.

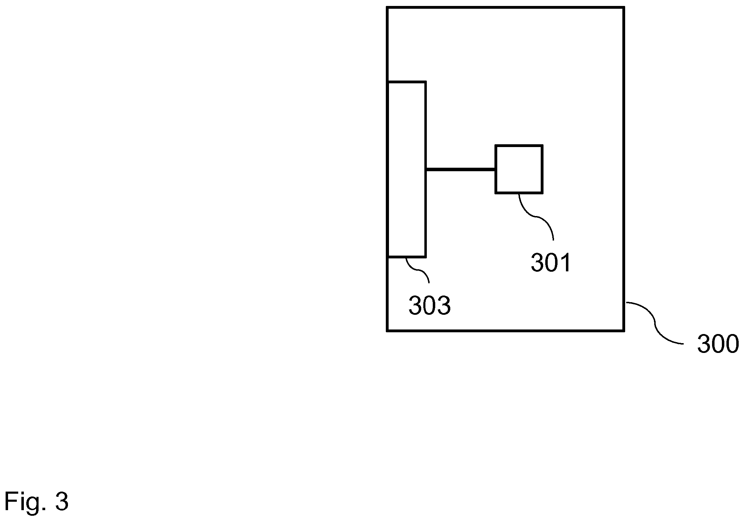

Fig. 3 zeigt ein schematisches Diagramm einer Serverentität 300 zum Kommunizieren mit einer Detektionsvorrichtung über ein Kommunikationsnetzwerk gemäß einer Ausführungsform. Der Detektionsvorrichtung ist eine Netzwerkadresse zugeordnet.

Die Detektionsvorrichtung ist ausgebildet, eine physikalische Größe zu detektieren, und Daten auszugeben, welche die physikalische Größe repräsentieren. Die Detektionsvorrichtung ist ausgebildet, ein Broadcastsignal über das Kommunikationsnetzwerk zu empfangen, wobei das Broadcastsignal eine Angabe über zumindest einen freien Sendezeitschlitz in einem vorbestimmten Sendeintervall aufweist. Die Detektionsvorrichtung ist ausgebildet, das Aussenden der Daten in dem freien Sendezeitschlitz zu unterbinden, falls das Broadcastsignal die Netzwerkadresse der Detektionsvorrichtung anzeigt.

Die Serverentität 300 umfasst einen Prozessor 301, welcher ausgebildet ist, den freien Sendezeitschlitz in dem vorbestimmten Sendeintervall zu bestimmen, und das Broadcastsignal zu erzeugen, wobei das Broadcastsignal die Angabe über den freien Sendezeitschlitz aufweist, und wobei das Broadcastsignal die Netzwerkadresse der Detektionsvorrichtung anzeigt. Die Serverentität 300 umfasst ferner eine Kommunikationsschnittstelle 303, welche ausgebildet ist, das Broadcastsignal über das Kommunikationsnetzwerk an die Detektionsvorrichtung auszusenden.

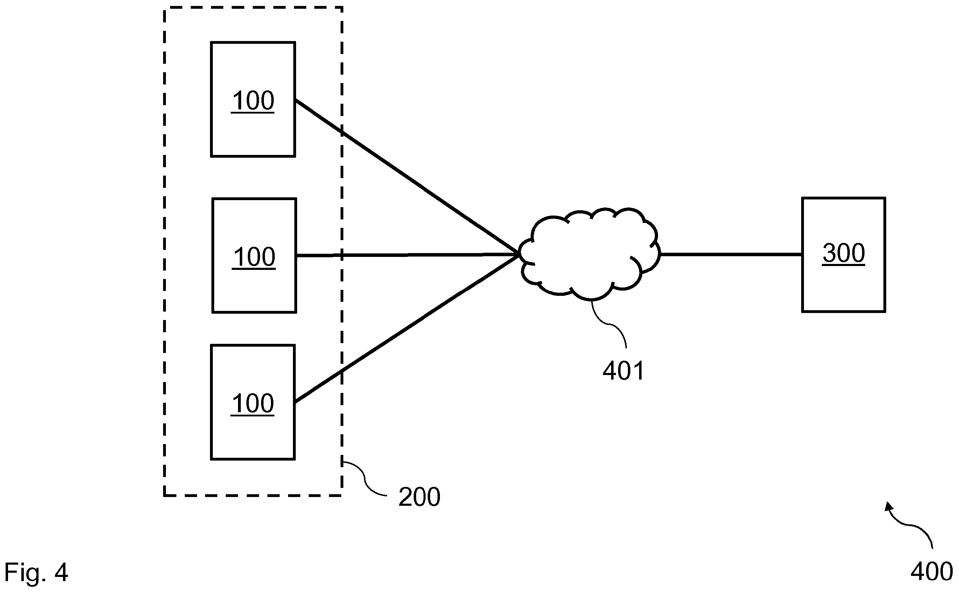

Fig. 4 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 ein freier Sendezeitschlitz in einem vorbestimmten Sendeintervall zum Aussenden von Daten zugeordnet ist, und wobei die freien Sendezeitschlitze unterschiedlich sind. Das Kommunikationssystem 400 umfasst ferner eine Serverentität 300, welche ausgebildet ist, mit jeder Detektionsvorrichtung 100 der Gruppe 200 über ein Kommunikationsnetzwerk 401 zu kommunizieren.

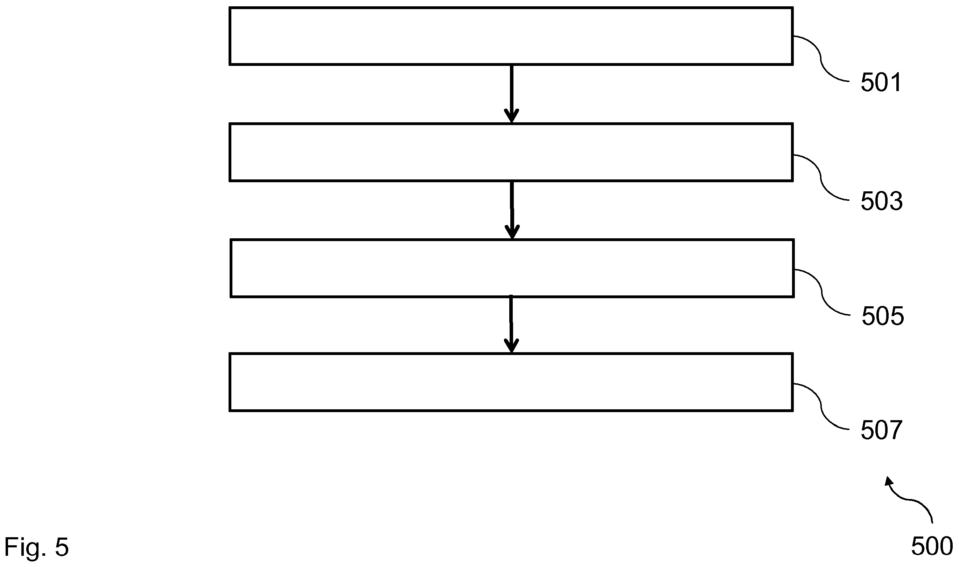

Fig. 5 zeigt ein schematisches Diagramm eines Verfahrens 500 zum Detektieren einer physikalischen Größe unter Verwendung einer Detektionsvorrichtung gemäß einer Ausführungsform.

Die Detektionsvorrichtung umfasst einen Detektor und eine Kommunikationsschnittstelle. Der Detektionsvorrichtung ist eine Netzwerkadresse zugeordnet.

Das Verfahren 500 umfasst ein Detektieren 501 der physikalischen Größe durch den Detektor, ein Ausgeben 503 von Daten durch den Detektor, welche die physikalische Größe repräsentieren, ein Empfangen 505 eines Broadcastsignals über ein Kommunikationsnetzwerk durch die Kommunikationsschnittstelle, wobei das Broadcastsignal eine Angabe über zumindest einen freien Sendezeitschlitz in einem vorbestimmten Sendeintervall aufweist, und ein Unterbinden 507 des Aussendens der Daten in dem freien Sendezeitschlitz durch die Kommunikationsschnittstelle, falls das Broadcastsignal die Netzwerkadresse der Detektionsvorrichtung anzeigt.

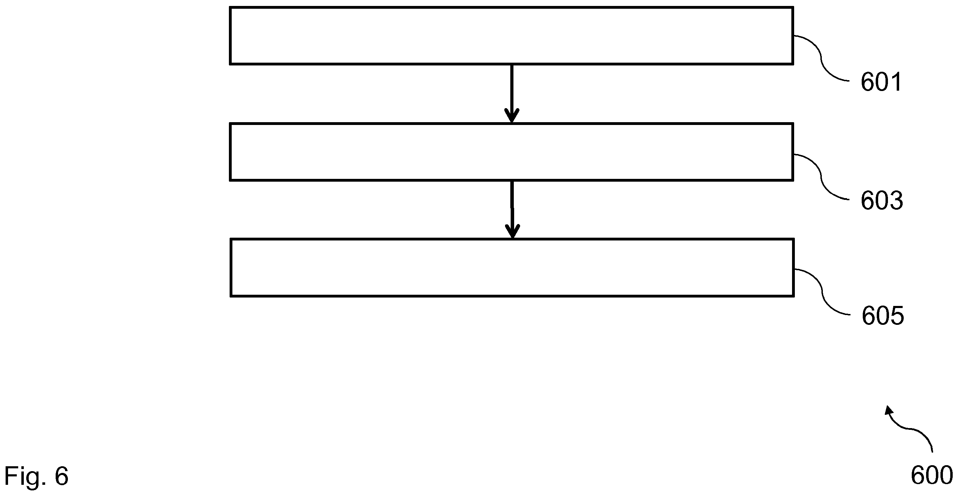

Fig. 6 zeigt ein schematisches Diagramm eines Verfahrens 600 zum Kommunizieren mit einer Detektionsvorrichtung über ein Kommunikationsnetzwerk unter Verwendung einer Serverentität gemäß einer Ausführungsform. Die Serverentität umfasst einen Prozessor und eine Kommunikationsschnittstelle. Der Detektionsvorrichtung ist eine Netzwerkadresse zugeordnet.

Die Detektionsvorrichtung ist ausgebildet, eine physikalische Größe zu detektieren, und Daten auszugeben, welche die physikalische Größe repräsentieren. Die Detektionsvorrichtung ist ausgebildet, ein Broadcastsignal über das Kommunikationsnetzwerk zu empfangen, wobei das Broadcastsignal eine Angabe über zumindest einen freien Sendezeitschlitz in einem vorbestimmten Sendeintervall aufweist. Die Detektionsvorrichtung ist ausgebildet, das Aussenden der Daten in dem freien Sendezeitschlitz zu unterbinden, falls das Broadcastsignal die Netzwerkadresse der Detektionsvorrichtung anzeigt.

Das Verfahren 600 umfasst ein Bestimmen 601 des freien Sendezeitschlitzes in dem vorbestimmten Sendeintervall durch den Prozessor, ein Erzeugen 603 des Broadcastsignals durch den Prozessor, wobei das Broadcastsignal die Angabe über den freien Sendezeitschlitz aufweist, wobei das Broadcastsignal die Netzwerkadresse der Detektionsvorrichtung anzeigt, und ein Aussenden 605 des Broadcastsignals über das Kommunikationsnetzwerk an die Detektionsvorrichtung durch die Kommunikationsschnittstelle.

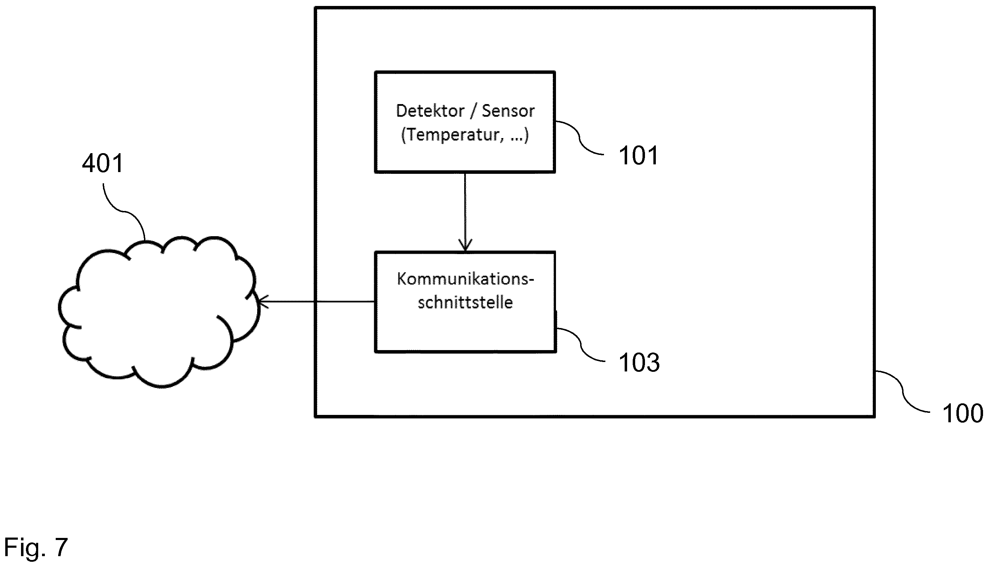

Fig. 7 zeigt ein schematisches Diagramm einer Detektionsvorrichtung 100 zum Detektieren einer physikalischen Größe gemäß einer Ausführungsform. Der Detektionsvorrichtung 100 ist eine Netzwerkadresse zugeordnet.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Die Detektionsvorrichtung 100 umfasst ferner eine Kommunikationsschnittstelle 103, welche ausgebildet ist, ein Broadcastsignal über ein Kommunikationsnetzwerk 401 zu empfangen, wobei das Broadcastsignal eine Angabe über zumindest einen freien Sendezeitschlitz in einem vorbestimmten Sendeintervall aufweist. Die Kommunikationsschnittstelle 103 ist ausgebildet, das Aussenden der Daten in dem freien Sendezeitschlitz zu unterbinden, falls das Broadcastsignal die Netzwerkadresse der Detektionsvorrichtung 100 anzeigt.

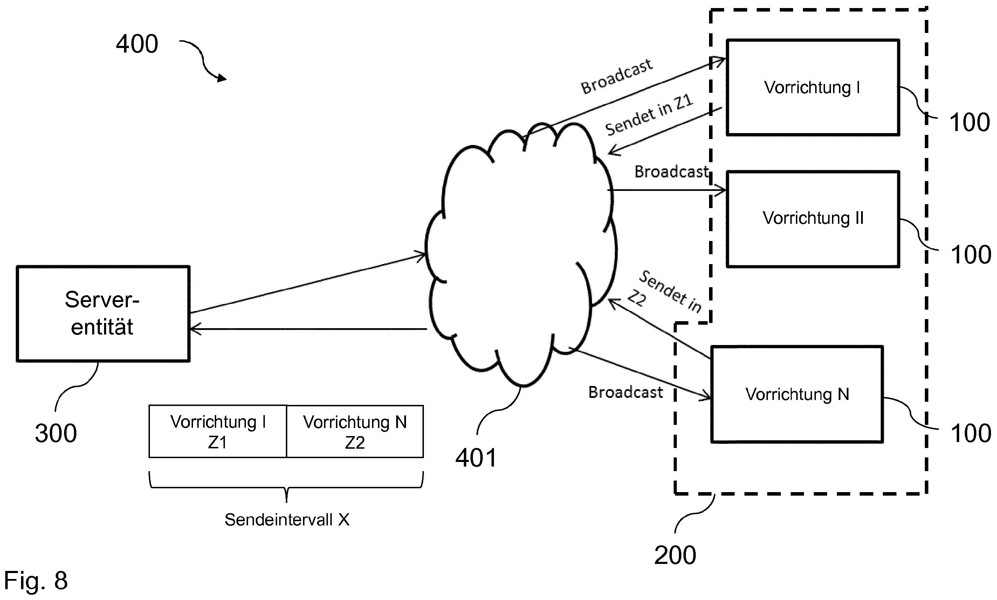

Fig. 8 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 ein freier Sendezeitschlitz in einem vorbestimmten Sendeintervall zum Aussenden von Daten zugeordnet ist, und wobei die freien Sendezeitschlitze unterschiedlich sind. Das Kommunikationssystem 400 umfasst ferner eine Serverentität 300, welche ausgebildet ist, mit jeder Detektionsvorrichtung 100 der Gruppe 200 über ein Kommunikationsnetzwerk 401 zu kommunizieren.

Das Sendeintervall X umfasst zwei Sendezeitschlitze Z1 und Z2, wobei der Sendezeitschlitz Z1 einer ersten Detektionsvorrichtung 100 zugeordnet ist, und wobei der Sendezeitschlitz Z2 einer N-ten Detektionsvorrichtung 100 zugeordnet ist. Das Broadcastsignal zeigt die Belegung des Sendeintervalls X mit den Sendezeitschlitzen Z1 und Z2 an. Eine zweite Detektionsvorrichtung 100 übermittelte Daten in einem vorhergehenden Sendeintervall X-1 und pausiert. Zwischen den Sendezeitschlitzen Z1 und Z2 können auch leere Zeitschlitze angeordnet sein.

Der Zugriff auf den Kommunikationskanal wird mithin Sendezeitschlitz-basiert geregelt, wobei die Sendezeitschlitze in Abhängigkeit einer jeweiligen Sendezeitschlitzdauer in unterschiedliche Kategorien eingeteilt werden können. Die Verwaltung der freien und/oder belegten Sendezeitschlitze kann durch die Serverentität 300 erfolgen, an welche die Daten von den Detektionsvorrichtungen 100 übertragen werden können.

Die freien Sendezeitschlitze können durch die Serverentität 300 periodisch bereitgestellt werden. Hierzu sendet die Serverentität 300 ein Broadcastsignal mit der Angabe freier Sendezeitschlitze in dem Sendeintervall bzw. in einer Sendephase aus. In einem darauffolgenden Sendeintervall können die Detektionsvorrichtungen 100 die freien Sendezeitschlitze mit Daten belegen, welche an die Serverentität 300 übermittelt werden.

Das Broadcastsignal kann darüber hinaus eine Angabe über Detektionsvorrichtungen 100 umfassen, welche in dem vorhergehenden Sendeintervall einen Sendezeitschlitz belegt haben, beispielsweise mittels einer Netzwerkadresse der jeweiligen Detektionsvorrichtung 100. Dadurch wird den Detektionsvorrichtungen 100 angezeigt, dass ihre Daten, welche in dem vorhergehenden Sendeintervall ausgesendet wurden, auch empfangen wurden (engl. Acknowledgement, ACK), und dass sie in dem darauffolgenden Sendeintervall keine Daten aussenden dürfen. Mit anderen Worten ausgedrückt dürfen in einem Sendeintervall, beispielsweise dem nachfolgenden Sendeintervall, nur diejenigen Detektionsvorrichtungen 100 senden, deren Netzwerkadresse nicht in dem Broadcastsignal und/oder in einem Sendezeitschlitz explizit genannt ist. Dieser Fall kann beispielsweise beim Einschalten einer Detektionsvorrichtung 100 eintreten.

Die Belegung der Sendezeitschlitze kann beispielsweise der Reihe nach, oder gemäß einem Warteschlangenmodell, gemäß einer Priorisierung der Detektionsvorrichtungen 100, und/oder in Abhängigkeit einer Sendezeitschlitzkategorie erfolgen. Die Belegung der Sendezeitschlitze kann ferner auf der Basis eines Media Access Control (MAC) Tokens erfolgen. Das MAC Token kann beispielsweise ein Zeitticket oder eine Richtlinie (engl. Policy) der Belegung der Sendezeitschlitze angeben. Ferner kann ein Sendezeitschlitz bei einer Montage der jeweiligen Detektionsvorrichtung 100 für die Gruppe 200 festgelegt werden.

Gemeinsam mit den Daten kann jeweils auch eine vorbestimmte Identitätskennung der Detektionsvorrichtung 100 für die Zuordnung der Daten ausgesendet werden. Die Kommunikation zwischen jeder Detektionsvorrichtung 100 der Gruppe 200 und der Serverentität 300 kann schmalbandig sein, d.h. mit sehr geringer Datenrate erfolgen.

Das Kommunikationsnetzwerk 401 kann ein drahtloses Kommunikationsnetzwerk oder ein drahtgebundenes Kommunikationsnetzwerk sein. Die Kommunikation kann beispielsweise unter Verwendung eines IEEE 802.1 1 Kommunikationsstandards (Wireless Local Area Network, WLAN), eines IEEE 802.15.1 Kommunikationsstandards (Bluetooth), eines DSL Kommunikationsstandards oder eines 3GPP Kommunikationsstandards erfolgen. Insbesondere kann die Kommunikation unter Verwendung eines Mobilfunkstandards der fünften Generation (5G) oder einer weiteren Generation durchgeführt werden.

Zusammenfassend kann eine dezentrale Steuerung des Zugriffs auf einen Kommunikationskanal realisiert werden. Es ergeben sich hierdurch mehrere Vorteile. Das Kommunikationssystem 400 kann kostengünstig implementiert werden. Zugleich können Kollisionen der Daten auf dem Kommunikationskanal vermieden werden. Das Kommunikationssystem 400 ermöglicht eine hohe Volumendatenrate, wodurch eine hohe Anzahl von Detektionsvorrichtungen unterstützt werden kann. Für die Kommunikation über das Kommunikationsnetzwerk 401 kann auf einen Rückkanal verzichtet werden. Ferner sind keine Bestätigungssignale (engl. Acknowledgements, ACKs) erforderlich. Für die Übertragung der Daten über das Kommunikationsnetzwerk 401 ist gegebenenfalls ein Kommunikationskanal ausreichend. Ferner kann eine einfache Modulation, beispielsweise eine Amplitudenmodulation oder eine Phasenmodulation, eingesetzt werden.

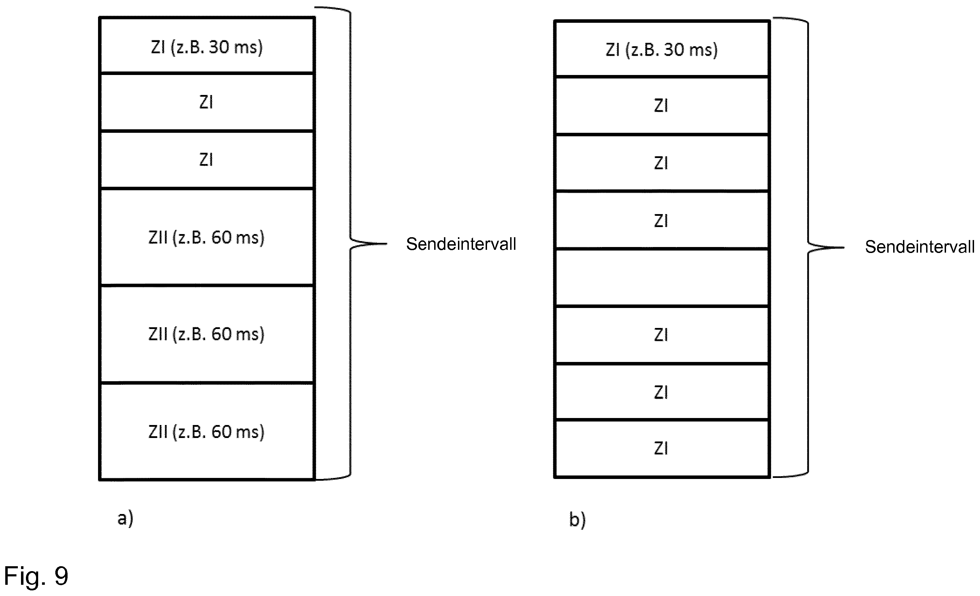

Fig. 9 zeigt ein schematisches Diagramm eines Sendeintervalls mit einer Mehrzahl von Sendezeitschlitzen gemäß einer Ausführungsform.

In Diagramm a) sind die Sendezeitschlitze ZI einer Gruppe von Detektionsvorrichtungen zugeordnet, wobei die Sendezeitschlitze ZI jeweils eine Sendezeitschlitzdauer aufweisen. Die Sendezeitschlitzdauer beträgt beispielsweise 30 Millisekunden. Die Sendezeitschlitze ZW sind einer weiteren Gruppe von Detektionsvorrichtungen zugeordnet, wobei die Sendezeitschlitze ZW jeweils eine weitere Sendezeitschlitzdauer aufweisen. Die weitere Sendezeitschlitzdauer beträgt beispielsweise 60 Millisekunden. Die Sendezeitschlitzdauer und die weitere Sendezeitschlitzdauer sind hierbei unterschiedlich. Den Detektionsvorrichtungen der Gruppe sowie den Detektionsvorrichtungen der weiteren Gruppe sind Sendezeitschlitze in demselben Sendeintervall zugeordnet.

In Diagramm b) sind die Sendezeitschlitze ZI einer Gruppe von Detektionsvorrichtungen zugeordnet, wobei die Sendezeitschlitze ZI jeweils eine Sendezeitschlitzdauer aufweisen.

Die Sendezeitschlitzdauer beträgt beispielsweise 30 Millisekunden. Den Detektionsvorrichtungen der Gruppe sind Sendezeitschlitze in dem Sendeintervall zugeordnet.

Die Dauer der Sendezeitschlitze kann folglich gleich oder unterschiedlich sein. Die Sendezeitschlitze können innerhalb des Sendeintervalls angeordnet sein. Sie können jedoch auch zeitlich voneinander separiert sein.

Die Dauer der Sendezeitschlitze kann in unterschiedliche Sendezeitschlitzkategorien unterteilt sein, wobei beispielsweise eine erste Kategorie eine Dauer von 30 Millisekunden aufweist, und eine zweite Kategorie eine Dauer von 60 Millisekunden aufweist. Das bedeutet, dass die Sendezeitschlitze Z1 und Z2 gleich oder unterschiedlich lang sein können. Unterschiedliche Sendezeitschlitzkategorien sind beispielhaft in Diagramm a) gezeigt. Gleiche Sendezeitschlitzkategorien sind beispielhaft in Diagramm b) gezeigt. Die Detektionsvorrichtungen können den Sendezeitschlitzkategorien auch fest zugeordnet sein.

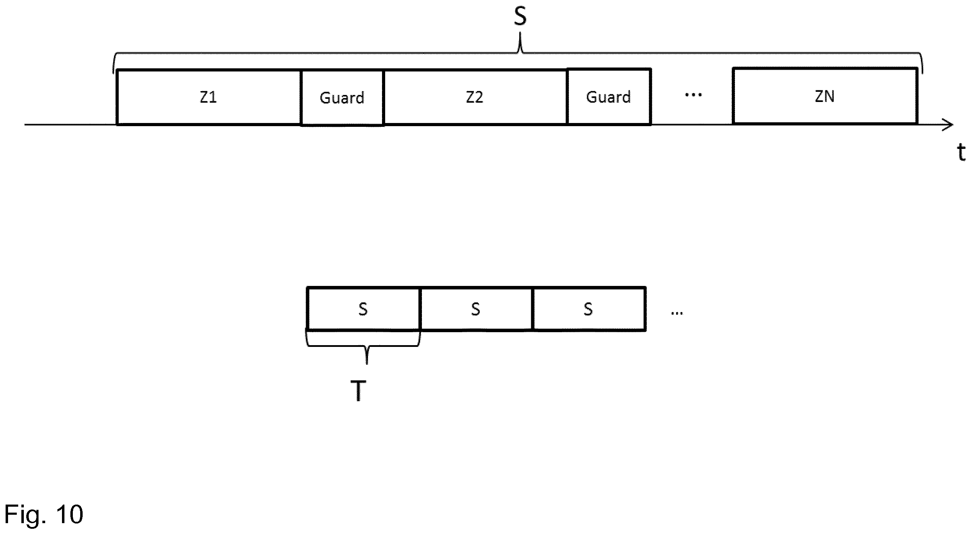

Fig. 10 zeigt ein schematisches Diagramm einer Mehrzahl von Sendeintervallen S mit einer Mehrzahl von Sendezeitschlitzen Z1, Z2, ZN gemäß einer Ausführungsform. Die Sendeintervalle S können sich periodisch wiederholen und/oder periodisch fortsetzen.

Die Sendezeitschlitze Z1, Z2, ZN können unmittelbar zeitlich aneinander anschließen. Die Sendezeitschlitze Z1, Z2, ZN können ferner jeweils durch eine Schutzzeit (engl. Guard) voneinander getrennt sein. Die Schutzzeit kann mithin optional verwendet werden. Die Verwendung einer Schutzzeit ist insbesondere vorteilhaft im Falle einer Funkkommunikation über das Kommunikationsnetzwerk.

Den Detektionsvorrichtungen kann jeweils eine vorbestimmte Sendeperiodendauer T zugeordnet sein, wobei die vorbestimmte Sendeperiodendauer T eine zeitliche Differenz zwischen einem weiteren freien Sendezeitschlitz und einem freien Sendezeitschlitz anzeigt. Der freie Sendezeitschlitz und der weitere freie Sendezeitschlitz können in zeitlich aufeinanderfolgenden Sendeintervallen S angeordnet sein. Die Sendeintervalle S können mithin periodisch mit der Periode T zur Verfügung stehen.

Zwischen den jeweiligen Sendeintervallen S kann ferner jeweils eine Intervallschutzzeit vorgesehen sein. Die Sendeintervalle S können auch aperiodisch angeordnet sein.

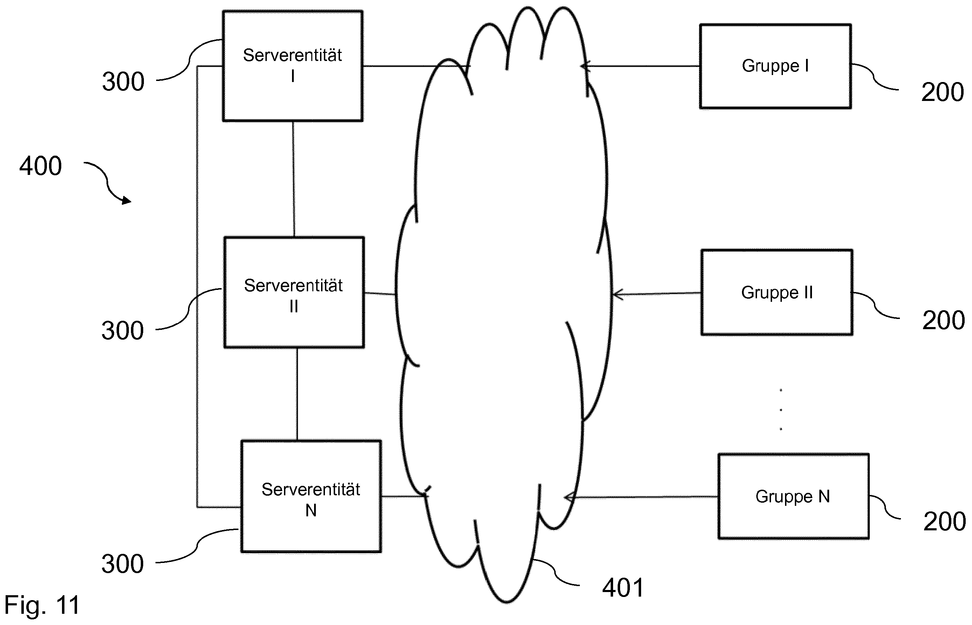

Fig. 11 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Die Gruppen 200 umfassen jeweils Detektionsvorrichtungen. Jeder Gruppe 200 ist eine zugehörige Serverentität 300 zugeordnet. Die Serverentitäten 300 können sich untereinander bezüglich der freien und/oder belegten Sendezeitschlitze unter Verwendung von Zeitschlitzbelegungssignalen synchronisieren. Auf diese Weise werden weitere Kollisionen bei der Kommunikation über das Kommunikationsnetzwerk 401 vermieden. Außerdem wird das Übertragungsmedium im Sinne einer Zeitdiversität effizient genutzt. Dadurch wird die Systemkapazität weiter erhöht. Außerdem können sich die Serverentitäten

300 unter Verwendung der Zeitschlitzbelegungssignale über freie und/oder belegte Sendezeitschlitze austauschen und sich diese gegenseitig zuweisen.

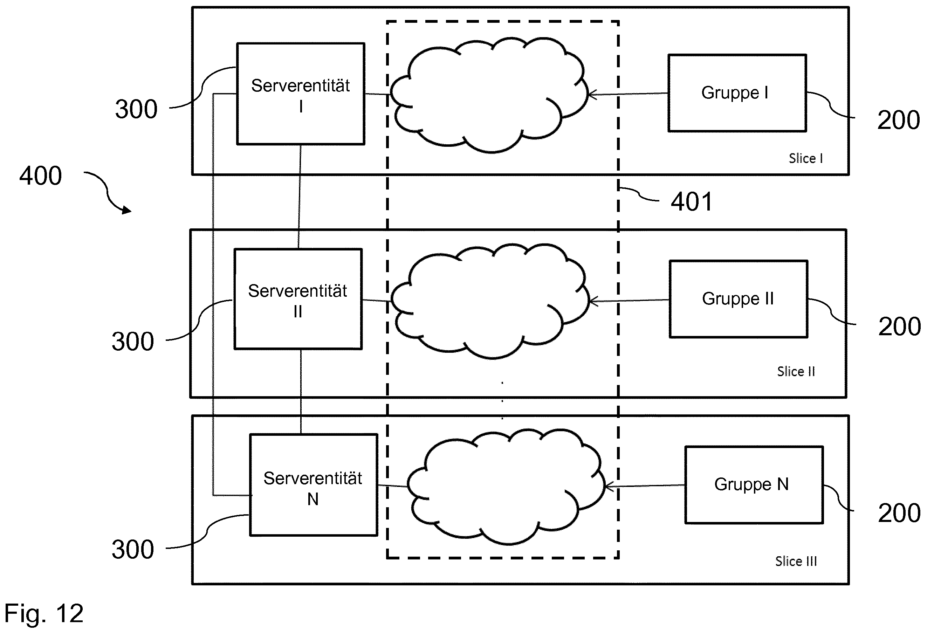

Fig. 12 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Das Kommunikationsnetzwerk 401 umfasst eine Mehrzahl von Subnetzwerken. Jede Gruppe 200 ist mit einer jeweiligen Serverentität 300 einem jeweiligen Subnetzwerk zugeordnet. Das Kommunikationsnetzwerk 401 kann ein Kommunikationsnetzwerk der fünften Generation (5G) oder einer weiteren Generation sein, wobei jedes Subnetzwerk einem Slice des Kommunikationsnetzwerkes 401 zugeordnet ist. Die Kommunikation zwischen den Serverentitäten 300 kann in einer Slice-Managementschicht, welche über der Infrastrukturschicht liegen kann, verwaltet werden.

### BEZUGSZEICHENLISTE

- 100: Detektionsvorrichtung
- 101: Detektor
- 103: Kommunikationsschnittstelle

- 200: Gruppe von Detektionsvorrichtungen

- 300: Serverentität
- 301: Prozessor
- 303: Kommunikationsschnittstelle

- 400: Kommunikationssystem
- 401: Kommunikationsnetzwerk

- 500: Verfahren zum Detektieren einer physikalischen Größe
- 501: Detektieren
- 503: Ausgeben
- 505: Empfangen
- 507: Unterbinden

- 600: Verfahren zum Kommunizieren mit einer Detektionsvorrichtung
- 601: Bestimmen
- 603: Erzeugen
- 605: Aussenden

## Patentansprüche

1. Detektionsvorrichtung (100) zum Detektieren einer physikalischen Größe, wobei der Detektionsvorrichtung (100) eine Netzwerkadresse zugeordnet ist, mit:
einem Detektor (101) zum Detektieren der physikalischen Größe, wobei der Detektor (101) ausgebildet ist, Daten auszugeben, welche die physikalische Größe repräsentieren; und
einer Kommunikationsschnittstelle (103), welche ausgebildet ist, ein Broadcastsignal über ein Kommunikationsnetzwerk (401) zu empfangen,
wobei das Broadcastsignal eine Angabe über zumindest einen freien Sendezeitschlitz in einem vorbestimmten Sendeintervall aufweist, und wobei die Kommunikationsschnittstelle (103) ausgebildet ist, das Aussenden der Daten in dem freien Sendezeitschlitz zu unterbinden, falls das Broadcastsignal die Netzwerkadresse der Detektionsvorrichtung (100) anzeigt, und
dass die Kommunikationsschnittstelle (103) ausgebildet ist, das Aussenden der Daten in dem freien Sendezeitschlitz zuzulassen, falls das Broadcastsignal die Netzwerkadresse der Detektionsvorrichtung (100) nicht anzeigt,
**dadurch gekennzeichnet,**
**dass** die Detektionsvorrichtung eingerichtet ist durch eine Anzeige ihrer Netzwerkadresse in dem Broadcastsignal auf einen erfolgreichen Empfang der Daten zu schließen.

2. Detektionsvorrichtung (100) nach dem vorherigen Anspruch, wobei der Detektor (101) ausgebildet ist, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen.

3. Detektionsvorrichtung (100) nach einem der vorstehenden Ansprüche, wobei der Detektionsvorrichtung (100) eine vorbestimmte Sendeperiodendauer zugeordnet ist,
wobei die vorbestimmte Sendeperiodendauer eine zeitliche Differenz zwischen einem weiteren freien Sendezeitschlitz und dem freien Sendezeitschlitz anzeigt, und wobei die Kommunikationsschnittstelle (103) ausgebildet ist, das Aussenden der Daten in dem weiteren freien Sendezeitschlitz zu unterbinden, falls das Broadcastsignal die Netzwerkadresse der Detektionsvorrichtung (100) anzeigt.

4. Detektionsvorrichtung (100) nach einem der vorstehenden Ansprüche, wobei der Detektionsvorrichtung (100) eine vorbestimmte Identitätskennung zugeordnet ist, wobei der Detektor (101) ausgebildet ist, die Daten mit der vorbestimmten Identitätskennung zu verknüpfen, und wobei die Kommunikationsschnittstelle (103) ausgebildet ist, die Daten mit der vorbestimmten Identitätskennung auszusenden.

5. Detektionsvorrichtung (100) nach einem der vorstehenden Ansprüche, wobei die Detektionsvorrichtung (100) einen Zeitgeber, insbesondere eine Echtzeituhr, zum Bereitstellen eines Zeitsignals umfasst, wobei das Zeitsignal eine Zeitdifferenz zwischen einem gegenwärtigen Zeitpunkt und einem vorbestimmten Referenzzeitpunkt anzeigt, und wobei die Kommunikationsschnittstelle (103) ausgebildet ist, einen Beginn des freien Sendezeitschlitzes auf der Basis des Zeitsignals zu bestimmen.

6. Detektionsvorrichtung (100) nach einem der vorstehenden Ansprüche, wobei das Kommunikationsnetzwerk (401) eine Mehrzahl von Subnetzwerken umfasst, und wobei die Kommunikationsschnittstelle (103) ausgebildet ist, die Daten über ein Subnetzwerk der Mehrzahl von Subnetzwerken auszusenden.

7. Gruppe (200) von Detektionsvorrichtungen (100) nach einem der Ansprüche 1 bis 6, wobei jeder Detektionsvorrichtung (100) ein freier Sendezeitschlitz in einem vorbestimmten Sendeintervall zum Aussenden von Daten zugeordnet ist, und wobei die freien Sendezeitschlitze unterschiedlich sind.

8. Serverentität (300) zum Kommunizieren mit einer Detektionsvorrichtung nach einem der Ansprüche 1-6 (100) über ein Kommunikationsnetzwerk (401), mit:
einem Prozessor (301), welcher ausgebildet ist, einen freien Sendezeitschlitz in einem vorbestimmten Sendeintervall zu bestimmen, und ein Broadcastsignal zu erzeugen, wobei das Broadcastsignal die Angabe über den freien Sendezeitschlitz aufweist, wobei das Broadcastsignal die Netzwerkadresse der Detektionsvorrichtung (100) anzeigt; und
einer Kommunikationsschnittstelle (303), welche ausgebildet ist, das Broadcastsignal über das Kommunikationsnetzwerk (401) an die Detektionsvorrichtung (100) auszusenden,
**dadurch gekennzeichnet,**
**dass** das Broadcastsignal die Netzwerkadresse der Detektionsvorrichtung (100) bei erfolgreichem Empfang der von der Detektionsvorrichtung gesendeten Daten aufweist.

9. Kommunikationssystem (400), mit:
einer Gruppe (200) von Detektionsvorrichtungen (100) nach einem der Ansprüche 1 bis 6, wobei jeder Detektionsvorrichtung (100) der Gruppe (200) ein freier Sendezeitschlitz in einem vorbestimmten Sendeintervall zum Aussenden von Daten zugeordnet ist, und wobei die freien Sendezeitschlitze unterschiedlich sind; und
einer Serverentität (300) nach Anspruch 8, welche ausgebildet ist, mit jeder Detektionsvorrichtung (100) der Gruppe (200) über ein Kommunikationsnetzwerk (401) zu kommunizieren.

10. Kommunikationssystem (400) nach Anspruch 9, mit:
einer weiteren Gruppe (200) von Detektionsvorrichtungen (100) nach einem der Ansprüche 1 bis 6, wobei jeder Detektionsvorrichtung (100) der weiteren Gruppe (200) ein freier Sendezeitschlitz in dem vorbestimmten Sendeintervall oder in einem weiteren Sendeintervall zum Aussenden von Daten zugeordnet ist, und wobei die freien Sendezeitschlitze unterschiedlich sind; und
einer weiteren Serverentität (300) nach Anspruch 8, welche ausgebildet ist, mit jeder Detektionsvorrichtung (100) der weiteren Gruppe (200) über das Kommunikationsnetzwerk (401) zu kommunizieren.

11. Verfahren (500) zum Detektieren einer physikalischen Größe unter Verwendung einer Detektionsvorrichtung (100), wobei die Detektionsvorrichtung (100) einen Detektor (101) und eine Kommunikationsschnittstelle (103) umfasst, wobei der Detektionsvorrichtung (100) eine Netzwerkadresse zugeordnet ist, mit:
Detektieren (501) der physikalischen Größe durch den Detektor (101);
Ausgeben (503) von Daten durch den Detektor (101), welche die physikalische Größe repräsentieren;
Empfangen (505) eines Broadcastsignals über ein Kommunikationsnetzwerk (401) durch die Kommunikationsschnittstelle (103),
wobei ein Broadcastsignal eine Angabe über zumindest einen freien Sendezeitschlitz in einem vorbestimmten Sendeintervall aufweist; und
Unterbinden (507) des Aussendens der Daten in dem freien Sendezeitschlitz durch die Kommunikationsschnittstelle (103), falls das Broadcastsignal die Netzwerkadresse der Detektionsvorrichtung (100) anzeigt und
dass die Kommunikationsschnittstelle (103) ausgebildet ist, das Aussenden der Daten in dem freien Sendezeitschlitz zuzulassen, falls das Broadcastsignal die Netzwerkadresse der Detektionsvorrichtung (100) nicht anzeigt,
**dadurch gekennzeichnet,**
**dass** die Detektionsvorrichtung durch eine Anzeige ihrer Netzwerkadresse in dem Broadcastsignal auf einen erfolgreichen Empfang der Daten schließt.

12. Verfahren (600) zum Kommunizieren mit einer Detektionsvorrichtung (100) nach Anspruch 1 über ein Kommunikationsnetzwerk (401) unter Verwendung einer Serverentität (300) nach Anspruch 8, wobei die Serverentität (300) einen Prozessor (301) und eine Kommunikationsschnittstelle (303) umfasst, wobei der Detektionsvorrichtung (100) eine Netzwerkadresse zugeordnet ist, wobei die Detektionsvorrichtung (100) ausgebildet ist, eine physikalische Größe zu detektieren, und Daten auszugeben, welche die physikalische Größe repräsentieren, wobei die Detektionsvorrichtung (100) ausgebildet ist, ein Broadcastsignal über das Kommunikationsnetzwerk (401) zu empfangen, wobei das Broadcastsignal eine Angabe über zumindest einen freien Sendezeitschlitz in einem vorbestimmten Sendeintervall aufweist, wobei die Detektionsvorrichtung (100) ausgebildet ist, das Aussenden der Daten in dem freien Sendezeitschlitz zu unterbinden, falls das Broadcastsignal die Netzwerkadresse der Detektionsvorrichtung (100) anzeigt, mit:
Bestimmen (601) des freien Sendezeitschlitzes in dem vorbestimmten Sendeintervall durch den Prozessor (301);
Erzeugen (603) des Broadcastsignals durch den Prozessor (301), wobei das Broadcastsignal die Angabe über den freien Sendezeitschlitz aufweist, wobei das Broadcastsignal die Netzwerkadresse der Detektionsvorrichtung (100) anzeigt; und Aussenden (605) des Broadcastsignals über das Kommunikationsnetzwerk (401) an die Detektionsvorrichtung (100) durch die Kommunikationsschnittstelle (303),
**dadurch gekennzeichnet,**
**dass** das Broadcastsignal die Netzwerkadresse der Detektionsvorrichtung (100) bei erfolgreichem Empfang der Daten aufweist.

13. Computerprogramm mit einem Programmcode zum Ausführen des Verfahrens (500) nach Anspruch 11 oder des Verfahrens (600) nach Anspruch 12, wenn der Programmcode auf einem Computer ausgeführt wird.

## Claims

1. Detection device (100) for detecting a physical variable, wherein the detection device (100) is assigned a network address, comprising:
a detector (101) for detecting the physical variable, wherein the detector (101) is designed to output data which represents the physical variable; and a communication interface (103) which is designed to receive a broadcast signal via a communication network (401),
wherein the broadcast signal contains information about at least one free transmission time slot in a predetermined transmission interval, and wherein the communication interface (103) is designed to suppress the transmission of the data in the free transmission time interval if the broadcast signal indicates the network address of the detection device (100), and
that the communication interface (103) is designed to allow the transmission of the data in the free transmission time interval if the broadcast signal does not indicate the network address of the detection device (100),
**characterized in that**
the detection device is configured to deduce a successful reception of the data from an indication of its network address in the broadcast signal.

2. Detection device (100) according to the preceding claim, wherein the detector (101) is designed to determine a temperature, a humidity, an energy, a power, a position, a speed, an acceleration, an angle, an angular velocity, an angular acceleration, a rotational speed, a force, a torque, an energy consumption, a water consumption, a heat consumption or a fuel consumption as a physical variable.

3. Detection device (100) according to any one of the preceding claims, wherein a predetermined transmission period duration is assigned to the detection device (100), wherein the predetermined transmission period duration indicates a temporal difference between a further free transmission time slot and the free transmission time slot, and wherein the communication interface (103) is designed to suppress the transmission of the data in the further free transmission time slot if the broadcast signal indicates the network address of the detection device (100).

4. Detection device (100) according to any one of the preceding claims, wherein a predetermined identity code is assigned to the detection device (100), wherein the detector (101) is designed to link the data to the predetermined identity code, and wherein the communication interface (103) is designed to transmit the data with the predetermined identity code.

5. Detection device (100) according to any one of the preceding claims, wherein the detection device (100) comprises a timer, in particular a real-time clock, for supplying a time signal, wherein the time signal indicates a time difference between a present time point and a predetermined reference time point, and wherein the communication interface (103) is designed to determine a beginning of the free transmission time slot on the basis of the time signal.

6. Detection device (100) according to any one of the preceding claims, wherein the communication network (401) comprises a plurality of subnetworks, and wherein the communication interface (103) is designed to transmit the data via a subnetwork of the plurality of subnetworks.

7. Group (200) of detection devices (100) according to any one of Claims 1 to 6, wherein a free transmission time slot in a predetermined transmission interval is assigned to each detection device (100) for transmitting data, and wherein the free transmission time slots are different.

8. Server entity (300) for communicating with a detection device according to any one of Claims 1-6 (100) via a communication network (401), comprising:
a processor (301) which is designed to determine a free transmission time slot in a predetermined transmission interval, and to generate a broadcast signal, wherein the broadcast signal contains the information about the free transmission time slot, wherein the broadcast signal indicates the network address of the detection device (100); and
a communication interface (303) which is designed to transmit the broadcast signal to the detection device (100) via the communication network (401),
**characterized in that**
the broadcast signal contains the network address of the detection device (100) upon successful reception of the data sent from the detection device.

9. Communication system (400), with:
a group (200) of detection devices (100) according to any one of Claims 1 to **6,** wherein a free transmission time slot in a predetermined transmission interval is assigned to each detection device (100) of the group (200) for sending data, and wherein the free transmission time slots are different; and
a server entity (300) according to Claim 8 which is designed to communicate with each detection device (100) of the group (200) via a communication network (401).

10. Communication system (400) according to Claim **9,** comprising:
a further group (200) of detection devices (100) according to any one of Claims 1 to **6,** wherein a free transmission time slot in the predetermined transmission interval or in a further transmission interval is assigned to each detection device (100) of the further group (200) for transmitting data, and wherein the free transmission time slots are different; and
a further server entity (300) according to Claim 8 which is designed to communicate with each detection device (100) of the further group (200) via the communication network (401).

11. Method (500) for detecting a physical variable using a detection device (100), wherein the detection device (100) comprises a detector (101) and a communication interface (103), wherein a network address is assigned to the detection device (100), including:
detecting (501) the physical variable by the detector (101);
outputting (503) data that represents the physical variable by the detector (101);
receiving (505) a broadcast signal via a communication network (401) via the communication interface (103),
wherein the broadcast signal includes information about at least one free transmission time slot in a predetermined transmission interval; and
suppressing (507) the transmission of the data in the free transmission time slot via the communication interface (103) if the broadcast signal indicates the network address of the detection device (100); and
that the communication interface (103) is designed to allow the transmission of the data in the free transmission time interval if the broadcast signal does not indicate the network address of the detection device (100),
**characterized in that**
the detection device deduces a successful reception of the data from an indication of its network address in the broadcast signal.

12. Method (600) for communicating with a detection device (100) according to Claim 1 via a communication network (401) using a server entity (300) according to Claim 8, wherein the server entity (300) comprises a processor (301) and a communication interface (303), wherein a network address is assigned to the detection device (100), wherein the detection device (100) is designed to detect a physical variable and to output data that represents the physical variable, wherein the detection device (100) is designed to receive a broadcast signal via the communication network (401), wherein the broadcast signal contains information about at least one free transmission time slot in a predetermined transmission interval, wherein the detection device (100) is designed to suppress transmission of the data in the free transmission time slot if the broadcast signal indicates the network address of the detection device (100), including:
determining (601) the free transmission time slot in the predetermined transmission interval by the processor (301);
generating (603) the broadcast signal by the processor (301), wherein the broadcast signal contains the information about the free transmission time slot, wherein the broadcast signal indicates the network address of the detection device (100); and
sending (605) the broadcast signal over the communication network (401) to the detection device (100) via the communication interface (303),
**characterized in that**
the broadcast signal contains the network address of the detection device (100) upon successful reception of the data.

13. Computer program with a program code for executing the method (500) according to Claim 11 or the method (600) according to Claim 12 when the program code is run on a computer.

## Revendications

1. Dispositif de détection (100) d'une grandeur physique, dans lequel une adresse réseau est attribuée au dispositif de détection (100), comportant
un détecteur (101) pour détecter la grandeur physique, dans lequel le détecteur (101) est configuré pour émettre des données, qui représentent la grandeur physique; et
une interface de communication (103) configurée pour recevoir un signal de diffusion via un réseau de communication (401),
dans lequel le signal de diffusion indique au moins un créneau horaire d'émission libre dans un intervalle d'émission prédéterminé et dans lequel l'interface de communication (103) est configurée pour empêcher l'émission des données dans le créneau horaire d'émission libre si le signal de diffusion indique l'adresse réseau du dispositif de détection (100) et
l'interface de communication (103) est configurée pour autoriser l'émission des données dans le créneau horaire d'émission libre si le signal de diffusion n'indique pas l'adresse réseau du dispositif de détection (100),
**caractérisé en ce que**
le dispositif de détection est configuré pour confirmer une réception réussie des données en indiquant son adresse réseau dans le signal de diffusion.

2. Dispositif de détection (100) selon la revendication précédente, dans lequel le détecteur (101) est configuré pour déterminer une température, une humidité, une énergie, une puissance, une position, une vitesse, une accélération, un angle, une vitesse angulaire, une vitesse de rotation, une force, un couple, une consommation **d'énergie,** une consommation d'eau, une consommation de chaleur ou une consommation de carburant en tant que grandeur physique.

3. Dispositif de détection (100) selon une des revendications précédentes, dans lequel une période d'émission prédéterminée est attribuée au dispositif de détection (100), dans lequel la période d'émission prédéterminée indique un décalage horaire entre un autre créneau horaire d'émission libre et le créneau horaire d'émission libre et dans lequel l'interface de communication (103) est configurée pour empêcher l'émission de données dans l'autre créneau horaire d'émission libre si le signal de diffusion indique l'adresse réseau du dispositif de détection (100).

4. Dispositif de détection (100) selon une quelconque des revendications précédentes, dans lequel un identifiant d'identité prédéterminé est attribué au dispositif de détection, dans lequel le détecteur (101) est configuré pour lier les données à l'identifiant d'identité prédéterminé et dans lequel l'interface de communication (103) est configurée pour transmettre les données avec l'identifiant d'identité prédéterminé.

5. Dispositif de détection (100) selon une quelconque des revendications précédentes, dans lequel le dispositif de détection (100) comprend une minuterie, notamment une horloge temps réel, pour fournir un signal horaire, dans lequel le signal indique un décalage horaire entre une heure actuelle et une heure de référence prédéterminée et dans lequel l'interface de communication (103) est configurée pour déterminer le début du créneau horaire d'émission libre sur la base du signal horaire.

6. Dispositif de détection (100) selon une quelconque des revendications précédentes, dans lequel le réseau de communication (401) comprend une pluralité de sous-réseaux, et dans lequel l'interface de communication (103) est configurée pour transmettre les données via un sous-réseau de la pluralité de sous-réseaux.

7. Groupe (200) de dispositifs de détection (100) selon une des revendications 1 à 6, dans lequel chaque dispositif de détection (100) se voit attribuer un créneau horaire d'émission libre dans un intervalle d'émission prédéterminé pour l'émission de données, et dans lequel les créneaux horaires d'émission libres sont différents.

8. Entité de serveur (300) pour communiquer avec un dispositif de détection (100) selon une des revendications 1 à 6 via un réseau de communication (401), comprenant :
un processeur (301) configuré pour déterminer un créneau horaire d'émission libre dans un intervalle d'émission prédéterminé et pour générer un signal de diffusion, dans lequel le signal de diffusion comprend des informations relatives au créneau horaire d'émission libre, dans lequel le signal de diffusion indique l'adresse réseau du dispositif de détection (100) ; et
une interface de communication (303) configurée pour transmettre le signal de diffusion au dispositif de détection (100) via le réseau de communication (401),
**caractérisé en ce que** le signal de diffusion inclut l'adresse réseau du dispositif de détection (100) lors de la réception réussie des données transmises par le dispositif de détection.

9. Système de communication (400), comprenant :
un groupe (200) de dispositifs de détection (100) selon une des revendications 1 à 6, dans lequel chaque dispositif de détection (100) du groupe (200) se voit attribuer un créneau horaire d'émission libre dans un intervalle d'émission prédéterminé pour l'émission de données et dans lequel les créneaux horaires d'émission libres sont différents ; et
une entité de serveur (300) selon la revendication **8,** configurée pour communiquer avec chaque dispositif de détection (100) du groupe (200) via un réseau de communication (401).

10. Système de communication (400) selon la revendication 9, comprenant :
un autre groupe (200) de dispositifs de détection (100) selon une quelconque des revendications 1 à 6, dans lequel chaque dispositif de détection (100) du groupe (200) se voit attribuer un créneau horaire d'émission libre dans l'intervalle d'émission prédéterminé ou dans un autre intervalle d'émission pour l'émission de données et dans lequel les créneaux horaires d'émission libres sont différents ; et
une autre entité de serveur (300) selon la revendication 8, configuré pour communiquer avec chaque dispositif de détection (100) de l'autre groupe (200) via le réseau de communication (401).

11. Procédé (500) de détection d'une grandeur physique en utilisant un dispositif de détection (100), dans lequel le dispositif de détection (100) comprend un détecteur (101) et une interface de communication (103), dans lequel une adresse réseau est attribuée au dispositif de détection (100), comprenant :
la détection (501) de la grandeur physique par le détecteur (101) ;
la sortie (503) de données par le détecteur (101) qui représentent la grandeur physique ;
la réception (505) d'un signal de diffusion via un réseau de communication (401) par l'interface de communication (103),
dans lequel un signal de diffusion indique au moins un créneau horaire d'émission libre dans un intervalle d'émission prédéterminé ; et
l'empêchement (507) de l'émission des données dans le créneau horaire d'émission libre par l'interface de communication (103) si le signal de diffusion indique l'adresse réseau du dispositif de détection (100) et
en ce que l'interface de communication (103) est configurée pour autoriser l'émission des données dans le créneau horaire d'émission libre si le signal de diffusion n'indique pas l'adresse réseau du dispositif de détection (100).
**caractérisé en ce que** le dispositif de détection conclut à la réception réussie des données en indiquant son adresse réseau dans le signal de diffusion.

12. Procédé (600) de communication avec un dispositif de détection (100) selon la revendication 1 via un réseau de communication (401) en utilisant une entité de serveur (300) selon la revendication 8, dans lequel l'entité de serveur (300) comprend un processeur (301) et une interface de communication (303), dans lequel une adresse réseau est attribuée au dispositif de détection (100), dans lequel le dispositif de détection est configuré pour détecter une grandeur physique et produire des données, qui représentent la grandeur physique, dans lequel le dispositif de détection (100) est configuré pour recevoir un signal de diffusion via le réseau de communication (401), dans lequel le signal de diffusion indique au moins un créneau horaire **d'émission** libre dans un intervalle d'émission prédéterminé, dans lequel le dispositif de détection (100) est configuré pour empêcher l'émission des données dans le créneau horaire d'émission libre si le signal de diffusion ne contient pas l'adresse réseau du dispositif de détection (100), comprenant :
la détermination (601) du créneau horaire d'émission libre dans l'intervalle d'émission prédéterminé par le processeur (301) ;
la génération (603) du signal de diffusion par le processeur (301), dans lequel le signal de diffusion contient les informations relatives à l'intervalle de temps d'émission libre, dans lequel le signal de diffusion indique l'adresse réseau du dispositif de détection (100) ; et
l'émission (605) du signal de diffusion via le réseau de communication (401) au dispositif de détection (100) via l'interface de communication (303),
**caractérisé en ce que** le signal de diffusion contient l'adresse réseau du dispositif de détection (100) lors de la réception réussie des données.

13. Programme informatique comprenant un code de programme pour exécuter le procédé (500) selon la revendication 11 ou le procédé (600) selon la revendication 12, lorsque le code de programme est exécuté sur un ordinateur.
